# EUROPEAN PATENT APPLICATION

(11) **EP 4 668 962 A1**
(43) Date of publication of application: **24.12.2025**
(21) Application number: 23922885.1
(22) Date of filing: 28.11.2023
(51) Int. Cl.: H04W 72/1268, H04W 72/0457, H04W 72/23, H04W 72/566

(54) **TERMINAL DEVICE FOR EFFICIENT TRANSMISSION OF UPLINK CONTROL INFORMATION, BASE STATION DEVICE, CONTROL METHOD, AND PROGRAM**

(30) Priority: 16.02.2023 JP 2023022585
(71) Applicant: KDDI Research, Inc., Fujimino-shi, Saitama 356-8502 (JP)
(72) Inventor: OHSEKI, Takeo, Fujimino-shi, Saitama 356-8502 (JP); KANNO, Issei, Fujimino-shi, Saitama 356-8502 (JP); KAMIWATARI, Shunsuke, Fujimino-shi, Saitama 356-8502 (JP); AMANO, Yoshiaki, Fujimino-shi, Saitama 356-8502 (JP)
(74) Representative: Mathys & Squire
(86) International application number: PCT/JP2023/042478
(87) International publication number: WO 2024/171552

(57) **Abstract**

A terminal device receives an instruction to transmit user data to a base station device using a first transport block and a second transport block in parallel and receiving information to be used by the terminal device to identify in which of the first transport block and the second transport block uplink control information (UCI) to be transmitted together with the user data is to be multiplexed, identifies, upon receiving the instruction from the base station device, in which of the first transport block and the second transport block the UCI is to be multiplexed with user data, based on the received information, and generates by multiplexing user data and the UCI in a transport block identified for multiplexing the UCI, and transmits to the base station device, the first transport block and the second transport block.

## Description

### TECHNICAL FIELD

The present invention relates to a technology for controlling transmission of uplink control information.

### BACKGROUND ART

In standards such as Long Term Evolution (LTE) of the 3rd Generation Partnership Project (3GPP (registered trademark)) and the 5th generation (5G) standards, it is stipulated that uplink control information (UCI) that is used to control communication is transmitted from a terminal device to a base station device. Such control information is transmitted via a physical uplink control channel (PUCCH) or a physical uplink shared channel (PUSCH). Here, if UCI is transmitted via a PUSCH, the UCI is transmitted by being multiplexed in a transport block of an uplink shared channel (UL-SCH) (see NPL 1).

A PUSCH can be constituted by a plurality of (two) transport blocks. That is to say, a terminal device can transmit two transport blocks in parallel. At this time, UCI is transmitted in at least one of the two transport blocks. In LTE, a block channel quality indicator (CQI) and a precoding matrix index (PMI) are multiplexed in a transport block that uses a modulation and coding scheme (MCS) having a higher communication rate out of two transport blocks constituting the PUSCH. Also, HARQ-ACK and a rank indication (RI) are distributed to the two transport blocks and multiplexed.

### CITATION LIST

### NON-PATENT LITERATURE

NPL 1: 3GPP (registered trademark) TS 36.212, V17.1.0, March 2022

### SUMMARY OF INVENTION

### TECHNICAL PROBLEM

It is envisioned that various communication services having different requirements, such as high-speed large-capacity communication and ultrahigh-reliability and low-latency communication (URLLC) are provided with 5G. Even if it becomes possible to configure a PUSCH with two or more transport blocks in 5G, if UCI for each communication service is transmitted using the same method as that used in LTE, it is envisioned that the requirements of the communication services will not be satisfied.

### SOLUTION TO PROBLEM

The present invention provides a technology for efficiently transmitting uplink control information.

A terminal device according to one aspect of the present invention comprises: receiving means for receiving an instruction to transmit user data to a base station device using a first transport block and a second transport block in parallel and receiving information to be used by the terminal device to identify in which of the first transport block and the second transport block uplink control information (UCI) to be transmitted together with the user data is to be multiplexed; identification means for identifying, upon receiving the instruction from the base station device, in which of the first transport block and the second transport block the UCI is to be multiplexed with user data, based on the received information; and transmitting means for generating the first transport block and the second transport block by multiplexing user data and the UCI in a transport block identified for multiplexing the UCI, and transmitting the first transport block and the second transport block to the base station device.

A base station device according to one aspect of the present invention comprises: transmission means for transmitting, to a terminal device, an instruction to transmit user data to the base station device using a first transport block and a second transport block in parallel and transmitting, to the terminal device, information to be used by the terminal device to identify in which of the first transport block and the second transport block uplink control information (UCI) to be transmitted together with the user data is to be multiplexed.

### ADVANTAGEOUS EFFECTS OF INVENTION

According to the present invention, it is possible to efficiently transmit uplink control information.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram showing a configuration example of a wireless communication system.
FIG. 2 is a diagram showing a hardware configuration example of a device.
FIG. 3 is a diagram showing a functional configuration example of a terminal device.
FIG. 4 is a diagram showing a functional configuration example of a base station device.
FIG. 5 shows an example of a flow of processing performed when the terminal device independently determines a transport block in which UCI is to be multiplexed.
FIG. 6 shows an example of a flow of processing performed when the base station device provides the terminal device with information of criteria for determining a transport block in which UCI is to be multiplexed.
FIG. 7 shows an example of a flow of processing performed when the base station device provides the terminal device with information designating a transport block in which HARQ-ACK is to be multiplexed.
FIG. 8 shows an example of a flow of processing performed when the base station device provides the terminal device with information designating a transport block in which CSI is to be multiplexed.

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

### (System Configuration)

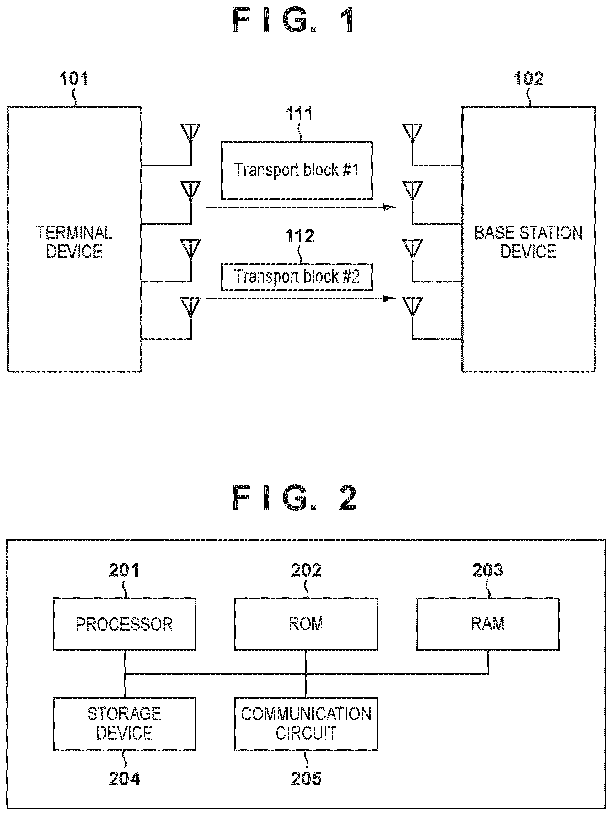

FIG. 1 shows a configuration example of a wireless communication system according to the present embodiment. The wireless communication system is, for example, a 5th generation (5G) cellular communication system and includes a terminal device 101 and a base station device 102. A plurality of streams (not shown) can be formed using a plurality of antennas between the terminal device 101 and the base station device 102. The terminal device 101 and the base station device 102 can communicate a plurality of (e.g., two) transport blocks of an uplink shared channel (UL-SCH) in parallel using the plurality of streams. The following describes a case where a maximum of two transport blocks are communicated in parallel, to make the description simple, but the following description is also applicable to cases where three or more transport blocks are communicated in parallel. FIG. 1 shows an example of a case where the terminal device 101 generates and transmits two transport blocks 111 and 112 for transmitting user data. Note that these transport blocks are mapped to a physical uplink control channel (PUSCH) and transmitted to the base station device 102 via the plurality of streams formed using the plurality of antennas.

The terminal device 101 transmits uplink control information (UCI) including measurement results of a wireless environment and an acknowledgment indicating a reception result of user data to the base station device 102 for communication control performed by the base station device 102. For example, the UCI is used to notify the base station device 102 of channel state information (CSI) or Hybrid Automatic Repeat reQuest-ACKnowledgment (HARQ-ACK). The UCI is given to the base station device 102 via a physical uplink control channel (PUCCH) or a physical uplink shared channel (PUSCH). Here, if the UCI is transmitted via a PUSCH, the UCI is multiplexed with user data in a transport block. Here, the terminal device 101 can transmit a plurality of transport blocks in parallel as described above. Accordingly, the UCI is transmitted by being multiplexed in at least any of the plurality of transport blocks.

Here, in Long Term Evolution (LTE), a terminal device is configured to be capable of transmitting two transport blocks in parallel, and a channel quality indicator (CQI) and a precoding matrix index (PMI), which constitute CSI, are multiplexed in a transport block that uses a modulation and coding scheme (MCS) having a higher communication rate (communication speed) out of the two transport blocks. Also, HARQ-ACK and a rank indication (RI) included in the CSI are distributed to the two transport blocks and multiplexed. If such a method of LTE is applied as is to 5G, it is envisioned that communication requirements will not be satisfied. In fact, it is envisioned that various communication services such as high-speed large-capacity communication and ultrahigh-reliability and low-latency communication (URLLC) are provided with 5G, and requirements for communication of UCI may vary between those communication services. For example, for highly reliable communication, it is important that HARQ-ACK surely reaches the base station device 102. Therefore, there may be situations in which it is more desirable to transmit UCI in a transport block having a low error rate even if a MCS having a low communication rate is used, for example. However, according to the method of LTE, it is envisioned that, for example, HARQ-ACK for communication that requires high reliability will be multiplexed in a transport block having a high error rate. Also, the information amount of CQI and PMI becomes large when information regarding a plurality of carriers is to be transmitted by carrier aggregation (CA) or the like, for example. Also, the information amount of CQI and PMI may become large due to settings of measurement or the like. In this case, if the size of the transport block is small, for example, the ratio of the amount of data of CQI and PMI to the amount of user data in the transport block becomes high, and the frequency use efficiency may become low. That is to say, it is envisioned that, if the amount of data of UCI becomes large, it is more desirable to multiplex the UCI in a transport block having a larger size, for example. On the other hand, a transport block in which UCI is to be multiplexed cannot be selected in this manner with the above-described method of LTE, and the communication efficiency may become low.

In view of the above circumstances, the present embodiment provides a method for multiplexing UCI in an appropriate transport block when a plurality of transport blocks are transmitted in parallel.

In an example, the terminal device 101 may determine a transport block in which UCI is to be multiplexed, among a plurality of transport blocks, based on a degree of priority of the UCI. Note that the degree of priority of UCI is identified based on a priority index of the UCI, for example. In an example, a high degree of priority (e.g., priority index=1) is allocated to UCI that requires high reliability. Also, a low degree of priority (e.g., priority index=0) is allocated to UCI for which the reliability may be relatively low. For example, the degree of priority of HARQ-ACK that is transmitted in uplink is determined based on the degree of priority of downlink data that is the target of the acknowledgment. For example, downlink control information (DCI) transmitted upon transmission of a physical downlink shared channel (PDSCH) includes a priority indicator. The degree of priority of the PDSCH and the corresponding HARQ-ACK may be dynamically determined based on the value of the priority indicator. That is to say, if DCI in which the value of the priority indicator is set to "1" is transmitted, the degree of priority of the PDSCH and the HARQ-ACK corresponding to the DCI is taken to be high. If DCI in which the value of the priority indicator is set to "0" is transmitted, the degree of priority of the PDSCH and the HARQ-ACK corresponding to the DCI is taken to be low. As described above, different degrees of priority may be allocated to HARQ-ACK according to the degree of priority of corresponding PDSCH. Therefore, in the present embodiment, the terminal device 101 may determine the degree of priority of each HARQ-ACK, and determine a transport block in which the HARQ-ACK is to be multiplexed, based on the determined degree of priority. As for CSI, if CSI is reported non-periodically, contents that are to be reported as the CSI are classified into two parts. A first part includes RI, a CSI-RS resource indicator, and CQI for a first code word, and a second part includes PMI, a layer indicator, and CQI for a second code word. The terminal device 101 of the present embodiment takes the first part to be information having a high degree of priority and takes the second part to be information having a low degree of priority, for example, and can determine transport blocks in which the first part and the second part are respectively to be multiplexed. In the case of Semi-persistent CSI reporting, the degree of priority may be determined based on the value of a priority indicator shown in DCI for enabling the report of CSI, for example. That is to say, if the value of the priority indicator is set to "1" and the Semi-persistent CSI reporting is enabled, the degree of priority of subsequent periodical CSI reporting is taken to be high. Note that the contents of the report are determined in advance by setting the radio resource control (RRC) layer. In this case, the same degree of priority may be allocated to all the contents of the report. As described above, transport blocks in which pieces of information such as CSI and HARQ-ACK are to be multiplexed are conventionally determined based on the types of those pieces of information, but the present embodiment makes it possible to multiplex pieces of information having different degrees of priority in different transport blocks even if those pieces of information are of the same type.

The terminal device 101 may multiplex UCI having a high degree of priority in a transport block for which an MCS corresponding to a relatively high communication rate is used, for example. It is envisioned that an MCS having a high communication rate is used when radio quality is relatively good. Accordingly, if UCI having a high degree of priority is multiplexed in a transport block for which an MCS corresponding to a relatively high communication rate is used, it is possible to transmit the UCI in highly reliable communication performed with such high radio quality. Also, if a target error rate is set for each transport block, for example, the terminal device 101 may multiplex UCI having a high degree of priority in a transport block having a lower target error rate. For example, when a first transport block is used to carry URLLC traffic and a second transport block is used to carry traffic other than URLLC, such as enhanced Mobile BroadBand (eMBB), for example, it is envisioned that the target error rate of the first transport block is lower than the target error rate of the second transport block. Therefore, UCI having a high degree of priority may be multiplexed in the first transport block, and UCI having a low degree of priority may be multiplexed in the second transport block. With this configuration, uplink transmission is performed in view of the degree of priority of UCI, and it is possible to prevent a reduction in the error rate of UCI having a high degree of priority.

If the two transport blocks use the same MCS or have the same target error rate, UCI having a high degree of priority may be multiplexed in a transport block that has a smaller transport block number. Also, if a total number of bits of UCI having a high degree of priority and UCI having a low degree of priority is not larger than a predetermined value, for example, the UCI having the low degree of priority may be multiplexed in a transport block in which the UCI having the high degree of priority is multiplexed. Here, the predetermined value may be calculated by, for example, multiplying the size of the transport block in which the UCI having the high degree of priority is multiplexed by a predetermined rate. That is to say, UCI having a low degree of priority may be multiplexed in a transport block in which UCI having a high degree of priority is multiplexed, as long as it is possible to secure a capacity that enables transmission of a sufficient amount of user data in the transport block. With this configuration, the terminal device 101 can increase the reliability and efficiency of the transmission of UCI having a low degree of priority as well while transmitting UCI having a high degree of priority with high reliability or a high efficiency.

Although an example of processing has been described in which a transport block in which UCI having a high degree of priority is to be multiplexed is identified according to MCSs used by respective transport blocks or the target error rates of the transport blocks, there is no limitation to this example. For example, UCI having a high degree of priority may be multiplexed in a transport block having high radio quality, based on radio quality of each transport block. In an example, when a transport block among a plurality of transport blocks has not been received normally by the base station device 102, the terminal device 101 retransmits the transport block. It is envisioned that, at this time, in order to make sure that the transport block will be successfully retransmitted, the terminal device 101 transmits the transport block by using an MCS whose communication rate is lower than that of an MCS used for the other transport block, even if radio quality is good. In this case, the terminal device 101 may multiplex UCI having a high degree of priority in the transport block for which the MCS having the relatively low communication rate is used. That is to say, it is envisioned that the error rate will become low due to the use of the MCS having the relatively low communication rate, and accordingly, UCI that requires high reliability may be transmitted in the transport block having a low error rate. Also, the terminal device 101 may identify a bit error rate estimated from a combination of radio quality and an MCS, for example, and multiplex UCI having a high degree of priority in a transport block having a low bit error rate.

As described above, the terminal device 101 can independently determine a transport block in which UCI is to be multiplexed based on the degree of priority of the UCI to be transmitted. A configuration is also possible in which the base station device 102 notifies the terminal device 101 of criteria for selecting a transport block in which UCI to be transmitted is to be multiplexed.

The base station device 102 transmits, to the terminal device 101, information that enables the terminal device 101 to identify a relationship between the degree of priority of UCI and a transport block in which the UCI is to be multiplexed, for example. The base station device 102 transmits such information using an RRC message, for example. The base station device 102 notifies the terminal device 101 of information that indicates criteria (e.g., whether the communication rate of the MCS is high or low, whether the target error rate is high or low, etc.,) for selecting a transport block in which UCI is to be multiplexed, with respect to each priority index, for example. A configuration is also possible in which the terminal device 101 is notified of only information that enables the terminal device to select a transport block in which UCI having a high degree of priority (e.g., priority index=1) is to be multiplexed, and the terminal device is not notified of information regarding UCI having a low degree of priority. For example, the base station device 102 notifies the terminal device 101 of information indicating that UCI having a high degree of priority is to be multiplexed in a transport block that uses an MCS having a higher communication rate, out of two transport blocks. If the transport block that uses the MCS having the higher communication rate and in which the UCI having the high degree of priority is multiplexed has a capacity available for the transmission of UCI having a low degree of priority, at least a portion of the UCI having the low degree of priority may be multiplexed in the transport block. If the size of the UCI having the low degree of priority is larger than the available capacity of the transport block that uses the MCS having the higher communication rate and in which the UCI having the high degree of priority is multiplexed, the UCI having the low degree of priority may be multiplexed in the other transport block. Note that a configuration is also possible in which the UCI having the low degree of priority is always multiplexed in the other transport block. Alternatively, a configuration is also possible in which, if a total number of bits (size) of the UCI having the low degree of priority and the UCI having the high degree of priority is not larger than a predetermined value, the UCI having the high degree of priority and the UCI having the low degree of priority are both multiplexed in the transport block in which the UCI having the high degree of priority is multiplexed, otherwise, the UCI having the high degree of priority and the UCI having the low degree of priority are respectively multiplexed in different transport blocks. The base station device 102 may notify the terminal device 101 of, for example, whether the UCI having the low degree of priority is to be multiplexed unconditionally in a transport block different from the transport block in which the UCI having the high degree of priority is multiplexed, or the UCI having the low degree of priority is to be multiplexed in the same transport block in which the UCI having the high degree of priority is multiplexed, when it is possible to do so. Note that the base station device 102 may dynamically change the relationship between the degree of priority of UCI and a transport block in which the UCI is to be multiplexed. In this case, the base station device 102 may transmit an individual message to the terminal device 101 when it is necessary to change the relationship, for example. Alternatively, the base station device 102 may, for example, periodically notify the terminal device 101 of information indicating the relationship between the degree of priority of UCI and a transport block in which the UCI is to be multiplexed.

As described above, the base station device 102 notifies the terminal device 101 of an indicator to be used by the terminal device 101 to determine a transport block in which UCI is to be multiplexed, and therefore, the UCI can be multiplexed in an appropriate transport block under the control performed by the base station device 102. Also, the base station device 102 performs the control dynamically, and therefore, can cause the terminal device 101 to transmit UCI efficiently according to a change in communication conditions or a change in communication policies.

In the above-described example, the base station device 102 transmits information that enables the terminal device 101 to identify a transport block in which UCI is to be multiplexed based on the degree of priority of the UCI, and the terminal device 101 performs, with respect to each UCI, processing for determining a transport block in which the UCI is to be multiplexed based on the information. On the other hand, the base station device 102 may transmit, to the terminal device 101, designation information that directly designates a transport block in which UCI is to be multiplexed. In this case, the terminal device 101 multiplexes designated UCI in the transport block designated by the base station device 102. For example, when transmitting downlink user data (PDSCH), the base station device 102 notifies the terminal device 101 of information designating a transport block in which HARQ-ACK regarding the user data is to be multiplexed. This notification may be given using DCI, for example. For example, the terminal device 101 is notified of the information indicating a transport block in which the HARQ-ACK corresponding to the PDSCH is to be multiplexed, using DCI that is transmitted upon transmission of the PDSCH. Thereafter, the base station device 102 transmits, to the terminal device 101, uplink grant for transmitting user data by using two transport blocks. In response to the uplink grant, the terminal device 101 generates pieces of user data to be respectively transmitted in the two transport blocks, and generates the two transport blocks by multiplexing HARQ-ACK corresponding to the PDSCH received in advance with user data that is transmitted in the transport block designated by the DCI. Then, the terminal device 101 executes predetermined processing such as modulation and mapping to the physical layer on the generated two transport blocks, and transmits the transport blocks to the base station device 102 using radio resources (frequency and time resources) designated by the uplink grant. Not only for HARQ-ACK, but also for CSI reporting, the base station device 102 may similarly notify the terminal device 101 of information designating a transport block in which the CSI is to be multiplexed. For example, in uplink grant for the transmission of user data in two transport blocks, the base station device 102 may notify the terminal device 101 of a request to report CSI and information indicating in which of the two transport blocks the CSI is to be multiplexed. The terminal device 101 generates pieces of user data to be respectively transmitted in the two transport blocks, and generates the two transport blocks by multiplexing the CSI with user data that is transmitted in the transport block designated by the DCI. Then, the terminal device 101 executes predetermined processing on the generated two transport blocks, and transmits the transport blocks to the base station device 102 using radio resources designated by the uplink grant.

If information indicating a transport block in which UCI is to be multiplexed is explicitly given from the base station device 102 as described above, the UCI can be surely transmitted in the transport block determined by the base station device 102.

### (Device Configuration)

Next, the following describes a device configuration. FIG. 2 shows a hardware configuration example of the base station device and the terminal device in the present embodiment. In an example, the base station device and the terminal device each include a processor 201, a ROM 202, a RAM 203, a storage device 204, and a communication circuit 205. The processor 201 is a computer including one or more processing circuits such as a general-purpose CPU (Central Processing Unit) or an ASIC (Application Specific Integrated Circuit), and executes the overall processing of the device and the above-described processing by reading and executing a program stored in the ROM 202 or the storage device 204. The ROM 202 is a read only memory in which a program relating to processing executed by the base station device or the terminal device and information such as various parameters are stored. The RAM 203 is a random access memory that functions as a work space when a program is executed by the processor 201, and in which information is temporarily stored. The storage device 204 is constituted by an attachable and detachable external storage device, for example. The communication circuit 205 is constituted by a circuit for wireless communication in accordance with 5G or succeeding standards, for example. Although FIG. 2 shows a single communication circuit 205, the base station device and the terminal device may each include a plurality of communication circuits. For example, the base station device and the terminal device may each include wireless communication circuits for 5G and succeeding standards and an antenna common to those circuits. Note that the base station device and the terminal device may include individual antennas suitable for respective standards. Also, the base station device may further include a wired communication circuit that is used for communication with other base station devices or nodes in a core network. The terminal device may further include a communication circuit in accordance with wireless communication standards other than cellular communication standards, such as wireless local area network (LAN) or Bluetooth (registered trademark). Note that the base station device and the terminal device may include separate communication circuits 205 corresponding to a plurality of frequency bands that can be used, or include a communication circuit 205 that is common to at least some of those frequency bands.

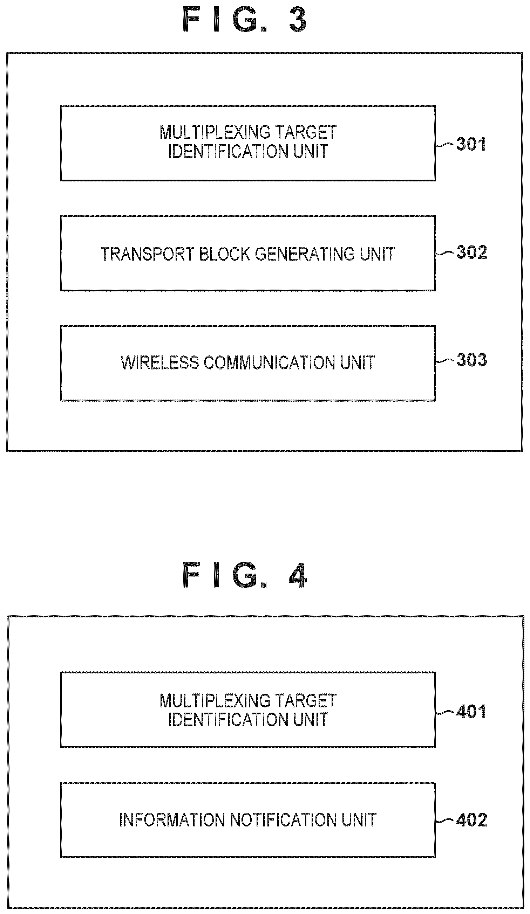

FIG. 3 shows a functional configuration example of the terminal device 101. The terminal device 101 includes a multiplexing target identification unit 301, a transport block generating unit 302, and a wireless communication unit 303, for example. Note that FIG. 3 only shows functions that particularly relate to the present embodiment, and illustration of various other functions that the terminal device 101 may have is omitted. For example, the terminal device 101 naturally has other functions that a terminal device that conforms to 5G or succeeding standards commonly has. Also, FIG. 3 schematically shows the functional blocks, and the functional blocks may be integrated or may be further divided. Each function shown in FIG. 3 may be realized by the processor 201 by executing the program stored in the ROM 202 or the storage device 204, for example, or may be realized by a processor included in the communication circuit 205 by executing predetermined software, for example. As for details of processing executed by the functional units, the above-described details will not be described here, and only an outline of the functions will be schematically described.

The multiplexing target identification unit 301 determines in which of a plurality of transport blocks, UCI to be transmitted by the terminal device 101 is to be multiplexed. For example, the multiplexing target identification unit 301 checks the priority index of information that is to be transmitted as UCI, and identifies the degree of priority of each information to be transmitted. Then, the multiplexing target identification unit 301 determines a transport block in which the information is to be multiplexed based on the degree of priority. For example, the multiplexing target identification unit 301 may determine to multiplex information having a high degree of priority in a transport block that uses an MCS having a relatively high communication rate, and determine to multiplex information having a low degree of priority in a transport block that uses an MCS having a relatively low communication rate. As described above, the multiplexing target identification unit 301 may also determine to multiplex at least any of information having a low degree of priority in a transport block in which information having a high degree of priority is multiplexed. Note that the other correspondence between the degree of priority of UCI and a transport block in which the UCI is to be multiplexed can be modified as described above, and the multiplexing target identification unit 301 may determine to multiplex UCI having a high degree of priority in a transport block that uses an MCS having a low communication rate or a transport block having a low target error rate, for example.

Alternatively, the multiplexing target identification unit 301 may determine a transport block in which information that is to be transmitted as UCI is to be multiplexed, based on information received from the base station device 102. For example, with respect to each degree of priority of UCI, information that indicates criteria for selecting a transport block in which the UCI is to be multiplexed may be given from the base station device 102. In this case, the multiplexing target identification unit 301 determines the degree of priority of each information that is to be transmitted as UCI, and determines a transport block in which the information is to be multiplexed based on the determination result and the information indicating the selection criteria received from the base station device 102. If the multiplexing target identification unit 301 has received from the base station device designation information explicitly designating a transport block in which UCI is to be multiplexed, the multiplexing target identification unit 301 identifies the transport block in which the UCI is to be multiplexed in accordance with the information.

The transport block generating unit 302 transmits a transport block to be transmitted to the base station device 102. For example, if DCI instructing to transmit two transport blocks in parallel has been received from the base station device 102, for example, the transport block generating unit generates two transport blocks in parallel. At this time, a transport block that has been determined by the multiplexing target identification unit 301 as the transport block in which UCI is to be multiplexed is generated by the transport block generating unit 302 by multiplexing the UCI. The wireless communication unit 303 transmits the generated transport blocks to the base station device 102. For example, the wireless communication unit 303 transmits the generated transport blocks to the base station device 102 by mapping the transport blocks onto wireless resources designated by the base station device 102.

FIG. 4 shows a functional configuration example of the base station device 102. The base station device 102 includes a multiplexing target identification unit 401 and a target information notification unit 402, for example. FIG. 4 shows an example configuration of a case in which the base station device 102 designates a transport block in which UCI is to be multiplexed, for the terminal device 101. FIG. 4 only shows functions that particularly relate to the present embodiment, and illustration of various other functions that the base station device 102 may have is omitted. For example, the base station device 102 naturally has other functions that a base station device that conforms to 5G or succeeding standards commonly has. Also, FIG. 4 schematically shows the functional blocks, and the functional blocks may be integrated or may be further divided. Each function shown in FIG. 4 may be realized by the processor 201 by executing the program stored in the ROM 202 or the storage device 204, for example, or may be realized by a processor included in the communication circuit 205 by executing predetermined software, for example. As for details of processing executed by the functional units, the above-described details will not be described here, and only an outline of the functions will be schematically described.

The multiplexing target identification unit 401 determines criteria that enable at least the terminal device 101 to identify a transport block in which UCI to be transmitted from the terminal device 101 is to be multiplexed. Alternatively, the multiplexing target identification unit 401 may explicitly determine the transport block in which the UCI to be transmitted by the terminal device 101 is to be multiplexed. The information notification unit 402 notifies the terminal device 101 of information that enables the terminal device 101 to identify the transport block in which the UCI is to be multiplexed.

### (Flow of Processing)

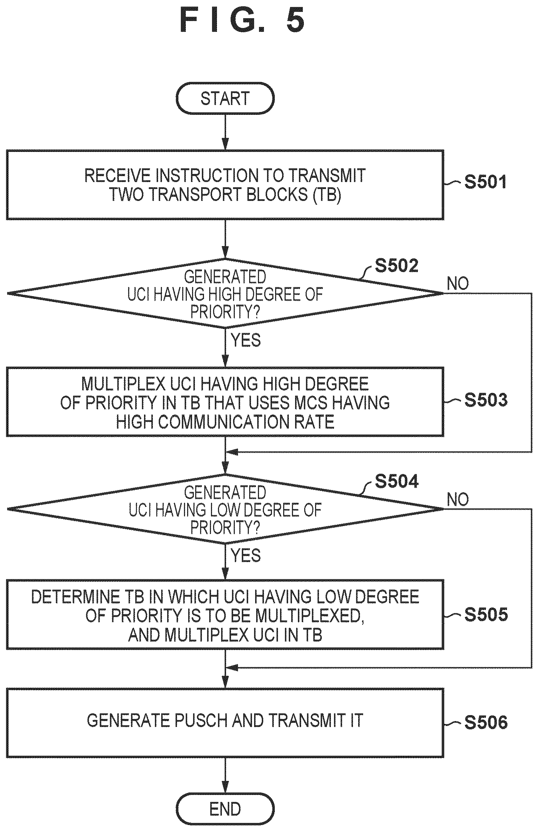

FIG. 5 shows an example of a flow of processing performed when the terminal device 101 independently determines a transport block in which UCI is to be multiplexed. In this processing, first, the terminal device 101 receives an instruction (uplink grant) to transmit two transport blocks in parallel from the base station device 102 (S501). Note that, if the terminal device 101 has received an instruction to transmit only one transport block, the terminal device 101 multiplexes all generated UCI in the transport block. On the other hand, if two transport blocks are to be transmitted in parallel and UCI needs to be transmitted, the terminal device 101 determines a transport block in which the UCI is to be multiplexed. For example, upon the generation of UCI having a high degree of priority (YES in S502), the terminal device 101 multiplexes the UCI in a transport block that uses an MCS having a high communication rate, for example (S503). Note that this is an example, and the UCI having a high degree of priority may be multiplexed in, for example, a transport block that uses an MCS having a low communication rate (having a high degree of fault tolerance) or a transport block having a low target error rate as described above. Also, upon the generation of UCI having a low degree of priority (YES in S504), the terminal device 101 determines a transport block in which the UCI is to be multiplexed (S505). For example, if the total size of the UCI having the low degree of priority and the UCI having the high degree of priority is not larger than a predetermined value, the terminal device 101 may determine to multiplex the UCI having the low degree of priority in the transport block in which the UCI having the high degree of priority is multiplexed. Alternatively, the terminal device 101 multiplexes a portion of the UCI having the low degree of priority in the transport block in which the UCI having the high degree of priority is multiplexed, and multiplexes the remaining portion of the UCI having the low degree of priority in a transport block that uses an MCS having a low communication rate, for example. Alternatively, the terminal device 101 may multiplex all the UCI having the low degree of priority in the transport block that uses the MCS having the low communication rate. Thereafter, the terminal device 101 generates and transmits a PUSCH including the transport blocks generated as described above (S506).

As described above, if there is UCI that is to be transmitted upon receiving an instruction to transmit uplink signals using two transport blocks, the terminal device 101 can transmit the UCI by multiplexing the UCI in a transport block that is selected based on the degree of priority of the UCI. In this procedure, if UCI having a high degree of priority needs to be surely transmitted, for example, selection criteria are set such that the UCI having the high degree of priority is multiplexed in a transport block for which an MCS having a high communication rate is used (i.e., it is envisioned that radio quality is good) or a transport block having a low target error rate. According to this procedure, by appropriately setting the criteria for selecting the transport block in which UCI having a high degree of priority is to be multiplexed, it is possible to increase a success rate of the transmission of the UCI to the base station device 102, for example, and to efficiently transmit the UCI.

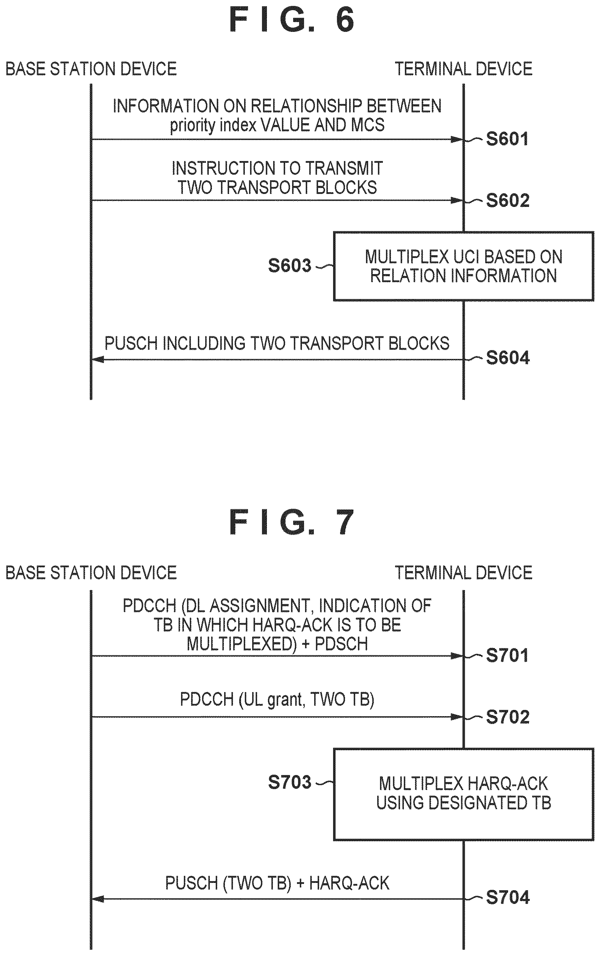

FIG. 6 shows an example of a flow of processing performed when the base station device 102 notifies the terminal device 101 of information of criteria to be used by the terminal device 101 to determine a transport block in which UCI is to be multiplexed. In this processing, with respect to each degree of priority (priority index) of UCI, the base station device 102 notifies the terminal device 101 of information indicating criteria for selecting a transport block in which the UCI is to be multiplexed (S601).

FIG. 6 shows an example in which information indicating a relationship between a priority index of UCI and an MCS that is used in a transport block in which the UCI is to be multiplexed is given as an example of the information indicating criteria from the base station device 102 to the terminal device 101. For example, the base station device 102 notifies the terminal device 101 of information indicating that UCI having a high degree of priority is to be multiplexed in a first transport block that uses an MCS having a higher communication rate, out of two transport blocks. At this time, the terminal device 101 may be notified of information indicating that UCI having a low degree of priority is to be multiplexed in a second transport block that uses an MCS having a lower communication rate, out of the two transport blocks. Alternatively, the terminal device 101 may be notified of information indicating that at least a portion of the UCI having the low degree of priority is to be multiplexed in the first transport block. At this time, the terminal device 101 may be notified of information indicating an allowable size of UCI that can be multiplexed in the first transport block. The terminal device 101 multiplexes UCI having a low degree of priority and a size not larger than the allowable size in the first transport block, and multiplexes UCI having a low degree of priority and a size larger than the allowable size in the second transport block. Alternatively, if the total size of UCI having a high degree of priority and UCI having a low degree of priority is not larger than a predetermined value, the terminal device 101 may be notified of information indicating that all those pieces of UCI are to be multiplexed in the first transport block. In this case, the base station device 102 may notify the terminal device 101 of the predetermined value. If the total size of UCI having a high degree of priority and UCI having a low degree of priority is larger than the predetermined value, the terminal device 101 may multiplex the UCI having the high degree of priority in the first transport block and multiplex the UCI having the low degree of priority in the second transport block. That is to say, even if the size of the UCI having the high degree of priority is sufficiently small and the first transport block still has a remaining capacity for multiplexing the UCI having the low degree of priority, if the total size of the UCI having the high degree of priority and the UCI having the low degree of priority is larger than the predetermined value, the terminal device 101 may multiplex all the UCI having the low degree of priority in the second transport block.

Thereafter, the base station device 102 transmits, to the terminal device 101, an instruction to transmit a PUSCH using two transport blocks in parallel (S602). Upon receiving the instruction to transmit a PUSCH using two transport blocks, the terminal device 101 determines the degree of priority of UCI to be transmitted, and multiplexes the UCI in at least one of the two transport blocks based on the degree of priority and the information received in step S601 (S603). The terminal device 101 may multiplex the UCI as shown in FIG. 5, for example. However, the criteria given from the base station device 102 in step S601 are used in steps S503 and S505 as the criteria for selecting a transport block in which the UCI is to be multiplexed. Then, the terminal device 101 transmits uplink signals to the base station device 102 using the two transport blocks in which the UCI is multiplexed as described above (S604).

As described above, the base station device 102 gives criteria for selecting a transport block in which UCI is to be multiplexed, and accordingly, the terminal device 101 can transmit the UCI by multiplexing the UCI in an appropriate transport block based on the degree of priority of the UCI. For example, the selection criteria may be determined such that, if UCI having a high degree of priority has a large amount of data, the UCI is multiplexed in a transport block for which an MCS having a high communication rate is used (i.e., it is envisioned that radio quality is good). Alternatively, in order that UCI having a high degree of priority will be surely transmitted, the selection criteria may be set such that the UCI having the high degree of priority is multiplexed in a transport block that has a low target error rate. According to this procedure, the criteria for selecting a transport block in which UCI having a high degree of priority is to be multiplexed can be appropriately set on the network side, and the terminal device 101 can efficiently transmit UCI via an appropriate transport block depending on situations.

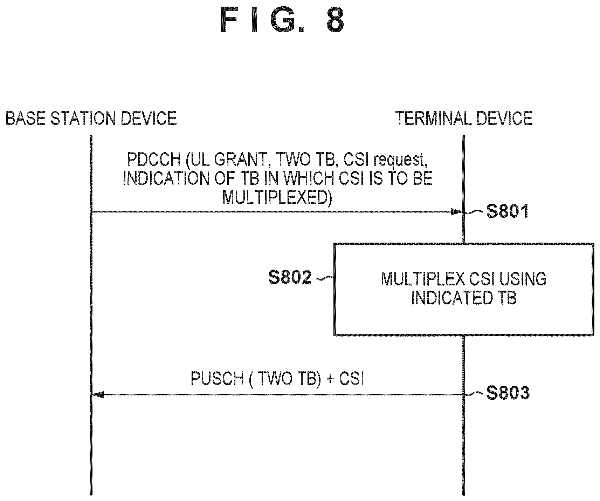

FIGS. 7 and 8 show examples of a flow of processing performed when the base station device 102 notifies the terminal device 101 of information explicitly indicating a transport block in which UCI is to be multiplexed. FIG. 7 shows an example of a case where HARQ-ACK is transmitted as UCI, whereas FIG. 8 shows an example of a case where CSI is transmitted as UCI. In FIG. 7, the base station device 102 transmits downlink data (PDSCH) to the terminal device 101 (S701). At this time, the terminal device 101 is notified of information indicating a transport block in which HARQ-ACK corresponding to the downlink data is to be multiplexed, in addition to information of radio resources used for the transmission of the downlink data, via a control signal (PDCCH) transmitted upon the transmission of the PDSCH. Thereafter, the base station device 102 transmits, to the terminal device 101, uplink grant for transmitting uplink user data by using two transport blocks (S702). The terminal device 101 generates pieces of user data respectively to be transmitted in the two transport blocks, and multiplexes HARQ-ACK regarding the downlink data received in step S701 with the user data (S703). At this time, the terminal device 101 multiplexes the HARQ-ACK in the transport block designated by the base station device 102. Then, the terminal device 101 transmits the generated two transport blocks to the base station device 102 (S704).

In FIG. 8, the base station device 102 transmits, to the terminal device 101, uplink grant requesting to transmit CSI when transmitting uplink user data by using two transport blocks (S801). At this time, information indicating a transport block in which the CSI is to be multiplexed is given to the terminal device 101. The terminal device 101 generates pieces of user data respectively to be transmitted in the two transport blocks, and multiplexes CSI, which is obtained separately by measuring radio quality, with the user data (S802). Then, the terminal device 101 transmits the generated two transport blocks to the base station device 102 (S803).

As described above, the base station device 102 explicitly designates a transport block in which UCI is to be multiplexed, and accordingly, the terminal device 101 can transmit the UCI by multiplexing the UCI in an appropriate transport block. Here, the base station device 102 determines the degree of priority of UCI that is to be transmitted by the terminal device 101, for example, and determines a transport block in which the UCI is to be multiplexed, based on the degree of priority. For example, in order that UCI having a high degree of priority will be surely transmitted, the base station device 102 may determine a transport block that has a low target error rate as the transport block in which the UCI having the high degree of priority is to be multiplexed. According to this procedure, the transport block in which UCI having a high degree of priority is to be multiplexed can be appropriately set on the network side, and the terminal device 101 can efficiently transmit UCI via an appropriate transport block depending on situations.

As described above, in the present embodiment, it is possible to efficiently transmit uplink control information. Therefore, it is possible to contribute to the goal 9 "build resilient infrastructure, promote sustainable industrialization and foster innovation" of the sustainable development goals (SDGs) led by the United Nations.

The invention is not limited to the foregoing embodiments, and various variations/changes are possible within the spirit of the invention.

This application claims priority from Japanese Patent Application No. 2023-022585 filed February 16, 2023, which is hereby incorporated by reference herein.

## Claims

1. A terminal device comprising:
receiving means for receiving an instruction to transmit user data to a base station device using a first transport block and a second transport block in parallel and receiving information to be used by the terminal device to identify in which of the first transport block and the second transport block uplink control information (UCI) to be transmitted together with the user data is to be multiplexed;
identification means for identifying, upon receiving the instruction from the base station device, in which of the first transport block and the second transport block the UCI is to be multiplexed with user data, based on the received information; and
transmitting means for generating the first transport block and the second transport block by multiplexing user data and the UCI in a transport block identified for multiplexing the UCI, and transmitting the first transport block and the second transport block to the base station device.

2. The terminal device according to claim 1,
wherein the information to be used by the terminal device to identify in which of the first transport block and the second transport block the UCI is to be multiplexed is criteria information to be used by the terminal device to determine in which of the first transport block and the second transport block the UCI is to be multiplexed based on a degree of priority of the UCI, and
the identification means identifies the degree of priority of the UCI, and identifies in which of the first transport block and the second transport block the UCI is to be multiplexed with user data based on the degree of priority and the criteria information.

3. The terminal device according to claim 1,
wherein the information to be used by the terminal device to identify in which of the first transport block and the second transport block the UCI is to be multiplexed is designation information designating a transport block in which the UCI is to be multiplexed, and
the identification means identifies, out of the first transport block and the second transport block, a transport block designated by the designation information as the transport block in which the UCI is to be multiplexed.

4. The terminal device according to claim 2 or 3,
wherein the UCI is associated with a first degree of priority or a second degree of priority that is lower than the first degree of priority,
the first transport block is configured to use a modulation and coding scheme (MCS) having a communication rate higher than a communication rate of an MCS used by the second transport block, or a target error rate of the first transport block is set to be lower than a target error rate of the second transport block, or the first transport block is a transport block for ultrahigh-reliability and low-latency communication (URLLC) and the second transport block is a transport block for communication other than the URLLC, and
the information to be used by the terminal device to identify in which of the first transport block and the second transport block the UCI is to be multiplexed is information that causes the identification means to determine to multiplex the UCI in the first transport block if the UCI is associated with the first degree of priority.

5. The terminal device according to claim 4,
wherein the information to be used by the terminal device to identify in which of the first transport block and the second transport block the UCI is to be multiplexed is information that further causes the identification means to determine to multiplex the UCI associated with the second degree of priority in the second transport block.

6. The terminal device according to claim 4,
wherein the information to be used by the terminal device to identify in which of the first transport block and the second transport block the UCI is to be multiplexed is information that further causes the identification means to determine to multiplex a portion of the UCI associated with the second degree of priority in the first transport block and multiplex a remaining portion of the UCI associated with the second degree of priority in the second transport block.

7. The terminal device according to claim 4,
wherein the information to be used by the terminal device to identify in which of the first transport block and the second transport block the UCI is to be multiplexed is information that further causes the identification means to determine to multiplex the UCI associated with the second degree of priority in the first transport block if a total size of the UCI associated with the first degree of priority and the UCI associated with the second degree of priority is not larger than a predetermined value, and causes the identification means to determine to multiplex the UCI associated with the second degree of priority in the second transport block if the total size of the UCI associated with the first degree of priority and the UCI associated with the second degree of priority is larger than the predetermined value.

8. A base station device comprising:
transmission means for transmitting, to a terminal device, an instruction to transmit user data to the base station device using a first transport block and a second transport block in parallel and transmitting, to the terminal device, information to be used by the terminal device to identify in which of the first transport block and the second transport block uplink control information (UCI) to be transmitted together with the user data is to be multiplexed.

9. The base station device according to claim 8,
wherein the information to be used by the terminal device to identify in which of the first transport block and the second transport block the UCI is to be multiplexed is criteria information to be used by the terminal device to determine in which of the first transport block and the second transport block the UCI is to be multiplexed, based on a degree of priority of the UCI.

10. The base station device according to claim 8,
wherein the information to be used by the terminal device to identify in which of the first transport block and the second transport block the UCI is to be multiplexed is designation information designating a transport block in which the UCI is to be multiplexed.

11. The base station device according to claim 9 or 10,
wherein the UCI is associated with a first degree of priority or a second degree of priority that is lower than the first degree of priority,
the first transport block is configured to use a modulation and coding scheme (MCS) having a communication rate higher than a communication rate of an MCS used by the second transport block, or a target error rate of the first transport block is set to be lower than a target error rate of the second transport block, or the first transport block is a transport block for ultrahigh-reliability and low-latency communication (URLLC) and the second transport block is a transport block for communication other than the URLLC, and
the information to be used by the terminal device to identify in which of the first transport block and the second transport block the UCI is to be multiplexed is information that causes the terminal device to determine to multiplex the UCI in the first transport block if the UCI is associated with the first degree of priority.

12. The base station device according to claim 11,
wherein the information to be used by the terminal device to identify in which of the first transport block and the second transport block the UCI is to be multiplexed is information that further causes the terminal device to determine to multiplex the UCI associated with the second degree of priority in the second transport block.

13. The base station device according to claim 11,
wherein the information to be used by the terminal device to identify in which of the first transport block and the second transport block the UCI is to be multiplexed is information that further causes the terminal device to determine to multiplex a portion of the UCI associated with the second degree of priority in the first transport block and multiplex a remaining portion of the UCI associated with the second degree of priority in the second transport block.

14. The base station device according to claim 11,
wherein the information to be used by the terminal device to identify in which of the first transport block and the second transport block the UCI is to be multiplexed is information that further causes the terminal device to determine to multiplex the UCI associated with the second degree of priority in the first transport block if a total size of the UCI associated with the first degree of priority and the UCI associated with the second degree of priority is not larger than a predetermined value, and causes the terminal device to determine to multiplex the UCI associated with the second degree of priority in the second transport block if the total size of the UCI associated with the first degree of priority and the UCI associated with the second degree of priority is larger than the predetermined value.

15. A control method executed by a terminal device, the method comprising:
receiving, from a base station device, an instruction to transmit user data to the base station device using a first transport block and a second transport block in parallel and receiving, from the base station device, information to be used by the terminal device to identify in which of the first transport block and the second transport block uplink control information (UCI) to be transmitted together with the user data is to be multiplexed;
upon receiving the instruction from the base station device, identifying in which of the first transport block and the second transport block the UCI is to be multiplexed with user data, based on the received information; and
generating the first transport block and the second transport block by multiplexing user data and the UCI in a transport block identified for multiplexing the UCI, and transmitting the first transport block and the second transport block to the base station device.

16. A control method executed by a base station device, the method comprising:
transmitting, to a terminal device, an instruction to transmit user data to the base station device using a first transport block and a second transport block in parallel and transmitting, to the terminal device, information to be used by the terminal device to identify in which of the first transport block and the second transport block uplink control information (UCI) to be transmitted together with the user data is to be multiplexed.

17. A program for causing a computer included in a terminal device to execute the control method according to claim 15.

18. A program for causing a computer included in a base station device to execute the control method according to claim 16.
